# EUROPEAN PATENT APPLICATION

(11) **EP 3 578 735 A1**
(43) Date of publication of application: **11.12.2019**
(21) Application number: 18713297.2
(22) Date of filing: 26.01.2018
(51) Int. Cl.: E04G 11/48, E04G 11/50, E04G 25/00, F16B 2/24, F16B 5/12, F16B 7/04, E04G 5/06

(54) **HEAD FOR BEAM JUNCTURES**

(30) Priority: 06.02.2017 ES 201730132
(71) Applicant: Sistemas Técnicos De Encofrados, S.A., 08150 Parets Del Valles (Barcelona) (ES)
(72) Inventor: UBIÑANA FELIX, Jose Luis, 08150 Parets Del Valles (Barcelona) (ES)
(74) Representative: Durán-Corretjer, S.L.P.
(86) International application number: PCT/ES2018/070057
(87) International publication number: WO 2018/142006

(57) **Abstract**

The invention relates to a head for beam junctures, comprising means for securing to a first beam and an area for receiving a post, wich area comprises two arms oblique with respect to one another, said arms leaving a lateral space between one another for placing a post in a space for a post, defined by both arms.

## Description

The present invention relates to formwork systems which include a series of primary formwork beams (referred to as stringers, primary beams or, simply, beams) that are supported on props, usually by means of headpieces. More specifically, the present invention relates to a headpiece which allows beams to intersect, forming any desired angle.

The primary formwork beams rest on the props and act as a support for the secondary formwork beams, which support the formwork panels.

More specifically, the present invention relates to a headpiece which allows said beams to be connected in accordance with multiple configurations.

One problem associated with the headpieces for beam intersections is that positioning the intersections proves difficult and time-consuming. Furthermore, precise positioning of the intersection requires a high level of expertise on the part of the operators.

An object of the present invention is to disclose a headpiece for props for formwork systems which does not have the above-mentioned disadvantages.

According to the invention, this is achieved by a headpiece that is connected to a first beam and that comprises means for receiving the prop on which a second beam is supported. The connection between the prop and the headpiece is achieved by means of two arms which are oblique relative to one another and which are preferably arranged such that a space is formed therebetween which allows insertion of the prop when said prop is inclined with respect to the vertical, but which arms leave a smaller space therebetween in a horizontal direction. One advantage of the connection using the arms is that it is easy to install. There are numerous configurations for the oblique arms that meet the specified condition, and a person skilled in the art can choose the one which they consider to be the most appropriate, depending on other requirements. The present application discloses arrangements which are particularly advantageous.

As a result of this configuration, positioning (inclining the prop) is simple and the prop remains connected without needing additional connection elements. Indeed, gravity causes the prop to remain substantially vertical, which prevents the prop from coming out of the headpiece by itself, since the distance between the arms in the horizontal direction is selected during design to be less than the diameter of the prop.

Another advantage of the headpiece of the present invention is that, when making the connection using two arms, it is possible to position the prop at different heights, making possible intersections at the relevant height and beam crossovers at different heights. In this regard, the arms may act as a seat for an upper flange of a headpiece. The space for the prop within the headpiece may also be defined by other elements, such as plates, etc.

Another advantage of the present invention is that the headpiece according to the present invention is installed firstly by placing the headpiece on a beam, then by placing the prop in the headpiece and finally the second beam on the prop. It is not necessary to preassemble sets of components or to mount interconnected elements.

According to another advantageous aspect disclosed by the invention, the headpiece may comprise a hook element for connection to a beam. This allows simple installation and adjustment of the headpiece.

The present invention discloses the combination of a basic headpiece structure of a known type and the use of plates comprising recesses for the ends of the formwork beams. The result is a cost-effective and durable headpiece that also allows multiple formwork configurations without the need for other types of headpiece or connecting pieces.

Another advantage of the present invention is that metal rods can be used to configure the arms. Advantageously, the headpiece may comprise a rod which forms the arms and the central portion of which acts as a connection means to the first beam (for example by means of a hook element which allows attachment of the headpiece to a beam by placing the headpiece on top of said beam).

More specifically, the present invention discloses a headpiece for beam intersections of the type comprising means of attachment to a first beam, characterised in that said headpiece additionally comprises a region for receiving a prop, which region comprises two arms that are oblique relative to one another, leaving a lateral space between said arms for inserting a prop in a space for a prop defined by the two arms.

Preferably, said arms are arranged such that the size of the lateral space between the arms in an oblique direction with respect to the horizontal is greater than the smallest distance between both arms in a horizontal direction, with the aim of allowing a prop to enter the prop space by inclining said prop with respect to the vertical, but preventing said prop from traversing said lateral space if the prop is arranged vertically.

Advantageously, one of the arms is arranged horizontally, while the other arm is arranged obliquely with respect to the horizontal plane, forming an angle of less than 90º and greater than 0º with respect to said plane.

Preferably, said angle is less than 45º, and more preferably less than or equal to 30º. Furthermore, said angle is preferably greater than or equal to 5º.

In a particularly advantageous embodiment, one of the arms is arranged horizontally, i.e. in parallel with the first beam, and the other arm is arranged in a vertical plane.

It is also possible for neither of the arms to be arranged horizontally, which would make it necessary to correspondingly reposition the other arm in order to meet the condition established by the present invention.

Preferably, the arms comprise seat regions for a prop flange.

In a preferred embodiment, the headpiece additionally comprises a plate which defines said space in conjunction with the arms. Preferably, said plate additionally comprises holes for attachment to said beam.

Preferably, the means of attachment to a beam comprise a hook element for suspending the headpiece from a beam.

Advantageously, the headpiece comprises a metal rod, the ends of which constitute said arms.

More preferably, the metal rod comprises a portion between the two ends which forms said hook element.

To aid understanding, explanatory yet non-limiting drawings are included of an embodiment of the method and device according to the present invention.
Fig. 1 is a view from above of an embodiment of an arrangement of beams with beam intersections at different angles other than a right angle.
Fig. 2 is a perspective view of an embodiment of a headpiece according to the present invention.
Fig. 3 is a side elevation view of the embodiment from Fig. 2, viewed from the side on which the prop is inserted into the headpiece.
Fig. 4 is a front elevation view of the embodiment from Fig. 2.
Fig. 5 is a view from above of the embodiment from Fig. 2.
Fig. 6 and 7 are both side elevation views in which a headpiece is shown attached to a beam and in which the process of placing a prop in the headpiece for allowing subsequent placement of another beam on the prop is shown.

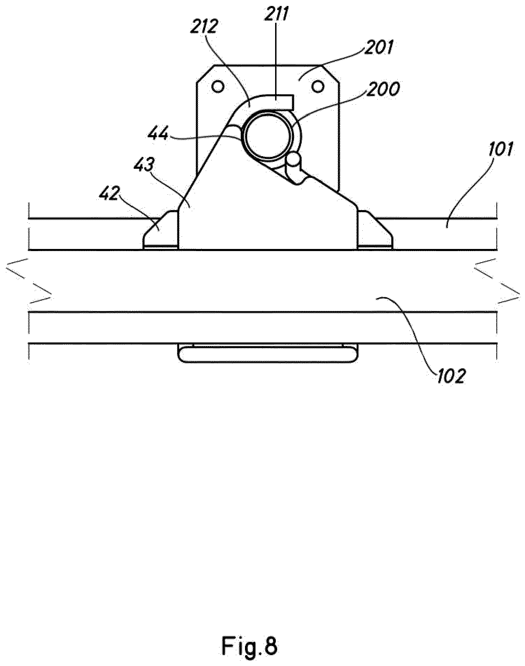

Fig. 8 is a view from below of the embodiment from Fig. 7.
Fig. 9 is a perspective view of the embodiment from Fig. 7 and 8.
Fig. 10 is a side elevation view of the system from Fig. 9.

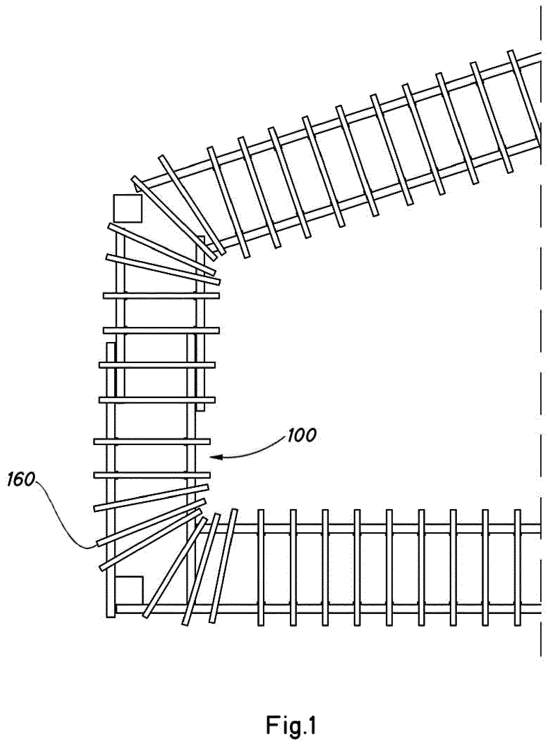

Fig. 1 shows an embodiment of a formwork system -100- to which the invention is directed and in which there are beam intersections at any desired angle, in particular at angles other than a right angle or in parallel, as is the case for the beam -160-.

The terms "upper", "lower", "horizontal" and "vertical" in the components of the headpiece shown and in the subsequent embodiments of the system according to the present invention take as a reference the most common use of the devices described in a formwork system, assuming that the beams are placed so as to be horizontally supported on usually vertical props, within the possible and/or usual placement tolerances in the field of construction.

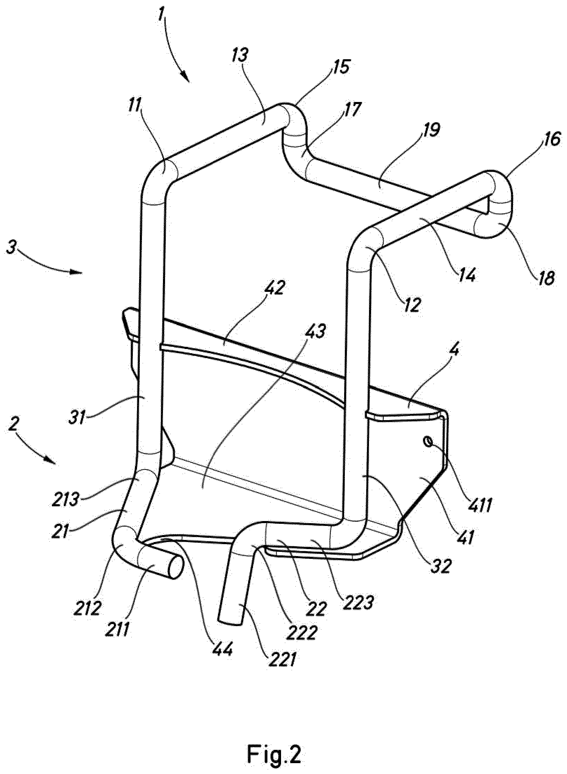

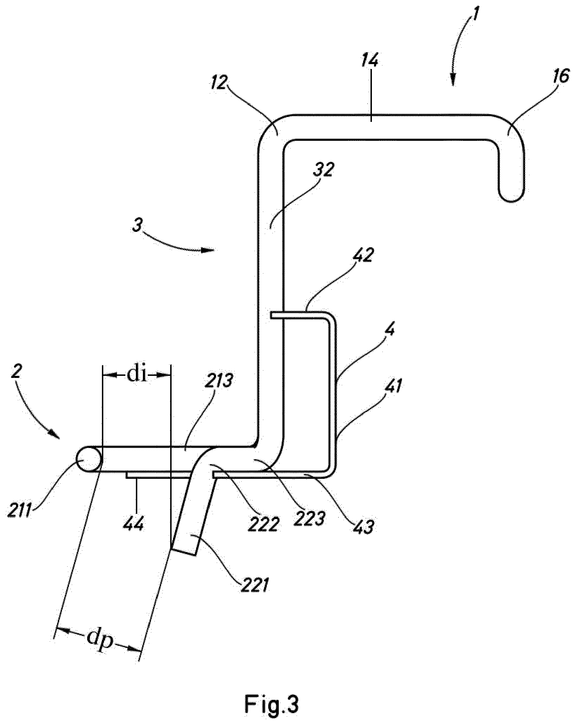

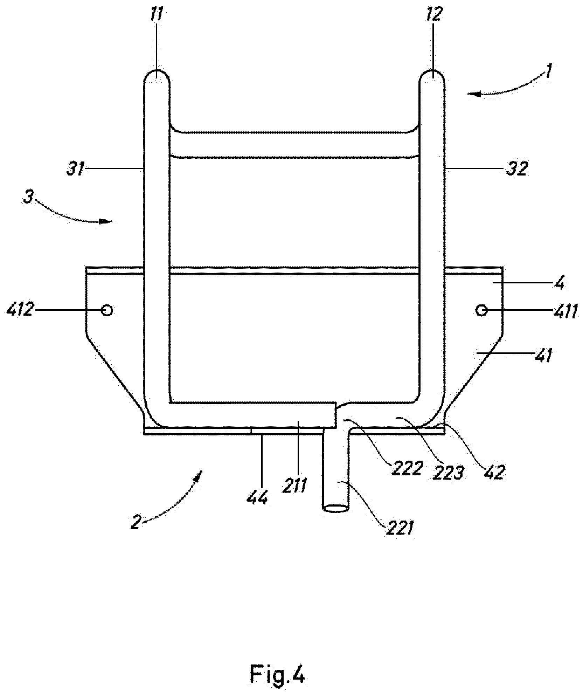

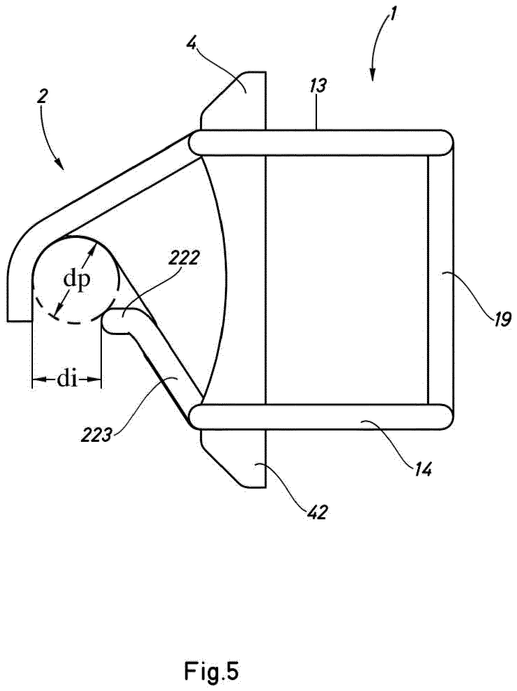

Fig. 2 to 5 show an embodiment of the headpiece according to the present invention.

The embodiment shown in the figures is formed of a bent metal rod and a metal sheet -4- that is also bent. The metal rod comprises a first region -1- which forms a hook element which allows the headpiece to be suspended from a horizontal beam, a second region -2- comprising two arms for receiving a prop and a third zone -3- which connects the first region -1- to the second region -2-, defining the lowest positioning point of the prop with respect to the beam from which the device is suspended.

The first region -1-, which constitutes the hook element, has a symmetrical structure and is formed of respective elbows -11-, -12- that give way to respective rod portions -13-, -14- that are designed to extend transversely over the spine of a beam and then into respective double elbows -15-, -16-, -17-, -18-which are connected by a crosspiece -19- and which are intended to drop vertically down the side of the beam, with the aim of stabilising the connection.

The third region -3- is intended to connect the hook element to the region comprising the arms, and in the case shown is formed of two parallel rod portions -31-, -32-. Different lengths of the third region -3- define positioning at a different minimum height of the upper part of the prop.

The second region -2- is defined by two arms -21-, -22- each formed of an end -211-, -221- of the rod, and a straight portion -213-, -223- and an elbow -212-, -222-, which define the spatial arrangement of the ends -211-, -221-.

The headpiece additionally comprises a metal sheet -4-, which is optional. The function of said metal sheet is auxiliary both in the attachment of the headpiece to the beam and in the subsequent positioning of the prop. In particular, the metal sheet in the embodiment is folded, thereby defining two plates. The first plate -43- is arranged horizontally and defines a profile -44- which, together with the arms -21-, -22-, defines the space for the prop. The second plate -41- is arranged vertically and, in this case, comprises two holes -411-, -412- for, optionally, screwing the headpiece to the beam. The second plate -41-additionally comprises another fold, which defines a region -42- comprising notches that receive the rod portions -31-, -32- of the second region, dimensionally stabilising the headpiece.

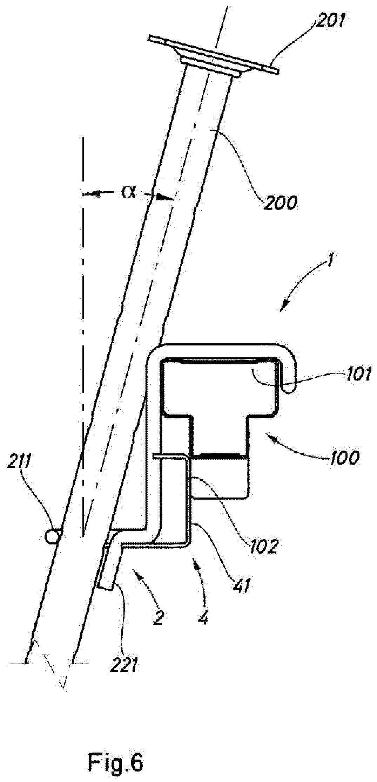

As can be seen in the figures, the arms -21-, -22-, and more particularly the ends -221-, -222-, are oblique relative to one another. In the case shown, they do not touch. The arms -21-, -22- define a space for receiving a prop -200-. Furthermore, the arms -21-, -22- leave a space such that a prop -200- can be inserted into the space intended for the prop by inclining the prop -200- by a particular angle -α- with respect to the vertical (see Fig. 6) when the headpiece is placed on a beam -100-, the first region -1-being on top of the upper part -101- of the beam. In the embodiment from Fig. 6, the plate -41- can be seen to rest on the lower part -102- of the beam (generally, this lower part -102- is made of wood, which allows the headpiece to be screwed to the beam -100- through the metal sheet -4-).

The prop, however, is attached without the possibility of coming free, because the horizontal size -di- of the gap left by the arms between them is smaller than the size -dp- of the gap corresponding to the diameter of the prop -200-. This can be achieved using different configurations of the arms. In the embodiment shown, one of the arms -21- is arranged horizontally, while the other arm -22- is arranged so as to form an acute angle with respect to the horizontal plane, said other arm not being perpendicular to said plane. In this way, when the other arm -22- forms an angle -α- with respect to the vertical, the distance between arms may be less than or greater than the diameter of the prop, allowing insertion of the prop when it is inclined by said angle with respect to the vertical, but said distance is less in the horizontal direction, making it impossible for the prop to come free on the insertion side when said prop is arranged vertically. Gravity causes the position of the prop -200- to tend to the vertical, as a result of which the attachment is stable.

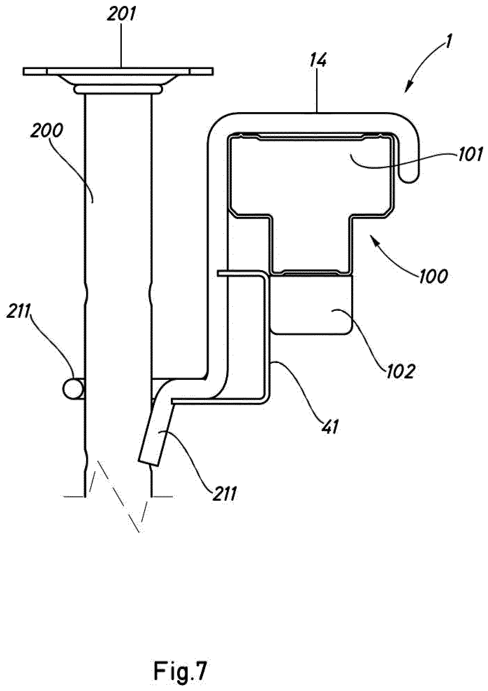

Once the prop -200- has been inserted in the headpiece, as shown in Fig. 6, the prop is in a vertical position (see Fig. 7) and can descend into its final position. The lowest position of the prop permitted by the headpiece is defined by the interference of the upper flange -201- of the prop -200- with one or both arms of the headpiece. Nevertheless, the headpiece allows the upper flange -201- to be in a higher position, if required.

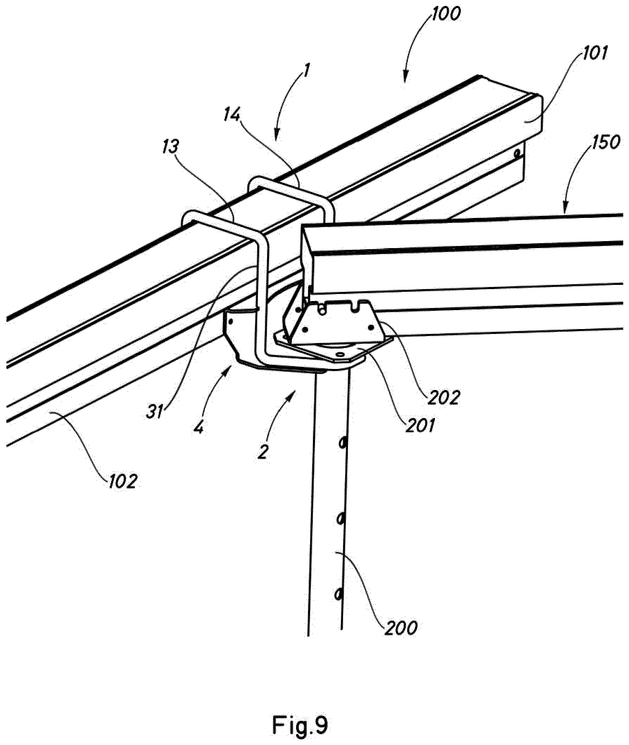

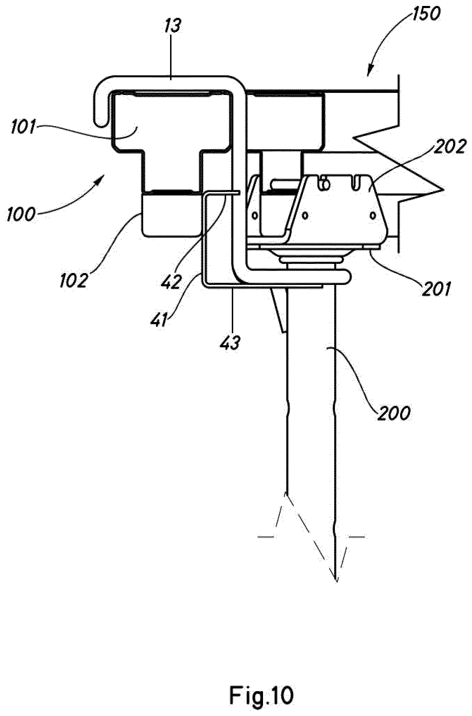

Once the prop -200- has been positioned, another beam -150- can be placed thereon using a corresponding accessory -202- of a known type, as shown in Fig. 9 and 10. As can be seen, the intersection between beams -100-, -150- obtained in this manner can be achieved using any angle. It is also possible for the beams to cross, for which purpose the flange -201- must be arranged higher with respect to the headpiece, allowing the beam -150- placed on the prop -200- to cross over the other beam -101-.

Although the invention has been set out and described with reference to embodiments thereof, it should be understood that these do not limit the invention, and that it is possible to alter many structural or other details that may prove obvious to persons skilled in the art after interpreting the subject matter disclosed in the present description, claims and drawings. Therefore, the scope of the present invention includes any variant or equivalent that could be considered covered by the broadest scope of the following claims.

## Claims

1. Headpiece for beam intersections of the type comprising means of attachment to a first beam, **characterised in that** it additionally comprises a region for receiving a prop, which region comprises two arms that are oblique relative to one another, leaving a lateral space between said arms for inserting a prop in a space for a prop defined by the two arms.

2. Headpiece according to claim 1, **characterised in that** said arms are arranged such that the size of the lateral space between the arms in an oblique direction with respect to the horizontal is greater than the smallest distance between both arms in a horizontal direction, with the aim of allowing a prop to enter the prop space by inclining said prop with respect to the vertical, but preventing said prop from traversing said lateral space if the prop is arranged vertically.

3. Headpiece according to either claim 1 or claim 2, **characterised in that** one of the arms is arranged horizontally, while the other arm is arranged obliquely with respect to the horizontal plane, forming an angle of less than 90º and greater than 0º with respect to said plane.

4. Headpiece according to claim 3, **characterised in that** said angle is less than 45º.

5. Headpiece according to claim 4, **characterised in that** said angle is less than or equal to 30º.

6. Headpiece according to any one of claims 3 to 6, **characterised in that** said angle is greater than or equal to 5º.

7. Headpiece according to any one of claims 1 to 6, **characterised in that** the arms comprise seat regions for a prop flange.

8. Headpiece according to any one of claims 1 to 7, **characterised in that** it additionally comprises a plate which defines said space in conjunction with the arms.

9. Headpiece according to claim 8, **characterised in that** said plate additionally comprises holes for attachment to said beam.

10. Headpiece according to any one of claims 1 to 9, **characterised in that** the means of attachment to a beam comprise a hook element for suspending the headpiece from a beam.

11. Headpiece according to any one of claims 1 to 10, **characterised in that** it comprises a metal rod, the ends of which constitute said arms.

12. Headpiece according to claims 10 and 11, **characterised in that** the metal rod comprises a portion between the two ends which forms said hook element.

13. Headpiece according to any one of the preceding claims, **characterised in that** one of the two arms is arranged horizontally, i.e. in parallel with the beam, and the other arm is arranged in a vertical plane.
